**Europäisches Patentamt**

**European Patent Office**

**Office européen des brevets**

(11) Veröffentlichungsnummer: **0 000 730**
**B1**

(12) **EUROPÄISCHE PATENTSCHRIFT**

(45) Veröffentlichungstag der Patentschrift: **23.12.81**

(21) Anmeldenummer: **78100501.2**

(22) Anmeldetag: **26.07.78**

(51) Int. Cl.³: **C 08 L 25/04, C 08 K 5/34, C 08 J 9/00**

(54) Flammfeste Polystyrolformmassen, die eine Stickstoff- und Brom-enthaltende heterocyclische Verbindung enthalten und ihre Verwendung.

(30) Priorität: **03.08.77 DE 2734926**

(43) Veröffentlichungstag der Anmeldung:
**21.02.79 Patentblatt 79/4**

(45) Bekanntmachung des Hinweises auf die Patenterteilung:
**23.12.81 Patentblatt 81/51**

(84) Benannte Vertragsstaaten:
**BE CH DE FR GB NL SE**

(56) Entgegenhaltungen:

**FR - A - 1 506 154**
**FR - A - 2 250 749**
**US - A - 3 227 715**

**CHEMICAL ABSTRACTS, vol. 78, no. 12 (26 March 1973)**
**Columbus, Ohio USA**
**TENAKA KATSUHISA "Fire-resistance treatment of synthetic resins with haloaryl triazines", Seite 40, erste Spalte, Abstract no. 73139x.**

(73) Patentinhaber: **BASF Aktiengesellschaft**
**Carl-Bosch-Strasse 38**
**D-6700 Ludwigshafen (DE)**

(72) Erfinder: **Hagen, Helmut, Dr.**
**Max-Slevogt-Strasse 17e**
**D-6710 Frankenthal (DE)**
Erfinder: **Naarmann, Herbert, Dr.**
**Haardtblick 15**
**D-6719 Wattenheim (DE)**
Erfinder: **Penzien, Klaus, Dr.**
**Bensheimer Ring 18**
**D-6710 Frankenthal (DE)**

# 0 000 730

Flammfeste Polystyrolformmassen, die eine Stickstoff- und Brom-enthaltende heterocyclische Verbindung enthalten und ihre Verwendung

Die Erfindung betrifft flammfeste, thermoplastische Formmassen auf Basis von treibmittelhaltigen Styrolpolymerisaten, die eine organische Bromverbindung als Flammschutzmittel enthalten, sowie deren Verwendung zur Herstellung von selbstverlöschenden Formkörpern.

Es ist bekannt, daß halogenhaltige Stoffe als Flammschutzmittel für selbstverlöschende thermoplastische Kunststoffe verwendet werden können. Um eine ausreichende Wirkung zu erzielen, müssen verhältnismäßig große Mengen an Halogenverbindungen zugesetzt werden. Dadurch werden jedoch die mechanischen Eigenschaften der Kunststoffe nachteilig beeinflußt. Es ist außerdem bekannt, daß die flammhemmende Wirkung organischer Bromverbindungen durch Zusatz organischer Peroxide verbessert wird. Diese haben jedoch den Nachteil, daß sie toxisch sind und sich mitunter explosionsartig zersetzen.

In der DT—OS 25 45 223 sind thermoplastische Formmassen auf Basis von Styrolpolymerisaten beschrieben, welche als hochwirksame Flammschutzmittel Derivate des 1,3,4-Thiadiazols enthalten. Geschäumtes Polystyrol, das mit solchen hochbromierten Thiadiazolderivaten flammfest ausgerüstet ist, hat den Nachteil, daß ein leicht gelber Farbton, bedingt durch die Eigenabsorption des Flammschutzmittels, auftreten kann. Außerdem zeigt sich, daß in manchen Fällen die mechanischen Eigenschaften der Schaumstoffe ungünstig beeinflußt werden. In der FR—PS 1 506 154 sind 2-Tribrommethyl-oxazoline beschrieben, die als Flammschutzmittel für Kunststoffe wirksam sein sollen. Diese Verbindungen sind aber thermisch wenig stabil, so daß bei der Verarbeitung entsprechend flammfest ausgerüsteter Formmassen eine Schädigung eintritt.

In der FR—PS 2 250 749 und in Chemical Abstracts Vol. 78, Seite 12, Referat No. 73 139 sind halogenphenyl-substituierte Triazine beschrieben, die als Flammschutzmittel für Polystyrol geeignet sein sollen. Es hat sich gezeigt, daß solche Verbindungen bei geschäumten Styrolpolymerisaten keine ausreichende Flammschutzwirkung haben.

Der Erfindung lag daher die Aufgabe zugrunde, das Angebot an Flammschutzmitteln zu erweitern und eine organische Bromverbindung zur Verfügung zu stellen, die aufgrund ihres Eigenschaftsbildes als hochwirksames Flammschutzmittel für treibmittelhaltige Styrolpolymerisate eingesetzt werden kann. Diese Aufgabe wird erfindungsgemäß gelöst, wenn man als Flammschutzmittel für flammfeste, thermoplastische Formmassen auf Basis von treibmittelhaltigen Styrolpolymerisaten 0,05 bis 5 Gewichtsprozent 2,4,6-Tris-(tribrommethyl)-1,3,5-triazin verwendet.

Als Styrolpolymerisate kommen Polystyrol und Mischpolymerisate des Styrols mit bis zu 50 Gew.% an Comonomeren in Frage. Comonomere können z.B. $\alpha$-Methylstyrol, Acrylnitril sowie Ester der Acryl- oder Methacrylsäure von Alkoholen mit 1 bis 8 Kohlenstoffatomen sein. In Betracht kommen auch schlagzäh modifizierte Styrolpolymerisate, die durch Polymerisation von Styrol, gegebenenfalls zusammen mit Acrylnitril, in Gegenwart kautschukartiger Butadien-, Isopren-, Äthylen/Propylen- oder Acrylester-Polymerisate hergestellt werden, beispielsweise schlagfestes Polystyrol mit 2 bis 10 Gew.% Polybutadien.

Die erfindungsgemäßen Formmassen enthalten als Treibmittel vorzugsweise flüssige oder gasförmige organische Verbindungen, die das Polymerisat nicht lösen und deren Siedepunkt unterhalb des Erweichungspunktes des Polymerisates leigt, z.B. aliphatische oder cycloaliphatische Kohlenwasserstoffe, wie Propan, Butan, Pentan, Hexan, Heptan oder Cyclohexan; ferner Kohlendioxid oder Halogenkohlenwasserstoffe wie Methylchlorid, Dichlordifluormethan oder 1,2,2-Trifluor-1,1,2-trichloräthan. Auch Treibmittelgemische sind anwendbar. Es ist vorteilhaft, 3 bis 10 Gewichtsprozent bezogen auf die Formmassen, an Treibmittel zu verwenden.

Die Formmassen enthalten 0,05 bis 5, vorzugsweise 0,1 bis 3 Gewichtsprozent des erfindungsgemäßen Flammschutzmittels. Dabei soll die Anwesenheit anderer, bekannter Flammschutzmittel und Synergisten nicht ausgeschlossen sein. Die Formmassen können noch weitere Komponenten enthalten, z.B. Füllstoffe, Farbpigmente, Gleitmittel, Weichmacher, Antistatika, Alterungsschutzmittel, Stabilisatoren oder solche Verbindungen, welche die Schaumbildung fördern.

Die organischen Bromverbindungen können beispielsweise auf der Walze, im Extruder oder in einem Kneter in den Kunststoff eingearbeitet werden. In vielen Fällen können sie auch bereits vor der Polymerisation den Monomeren zugesetzt werden. Es ist auch möglich, z.B. bei der Herstellung von Gießfolien, die Polymeren zusammen mit der Bromverbindung einer Lösung des Kunststoffes zuzusetzen und das Lösungsmittel abzudampfen.

Vorzugsweise werden die organischen Bromverbindungen oberflächlich auf die treibmittelhaltigen Styrolpolymerisate aufgebracht. Um ein Verbacken oder Verkleben der beschichteten treibmittelhaltigen Polystyrol-Teilchen bei der Weiterverarbeitung zu verhindern, ist es vorteilhaft, zusätzlich zu den Bromverbindungen noch Antiverklebungsmittel auf die Teilchen aufzubringen. Besonders geeignet dafür ist feinteilige Kieselsäure, die vorzugsweise in Mengen von 0,005 bis 0,1 Gew.% bezogen auf die Formmasse, eingesetzt wird.

In nachfolgenden Arbeitsschritten wird das treibmittelhaltige Polymerisat aufgeschäumt und zu Formteilen verschweißt. Die Formmassen können in feinteiliger Form, z.B. als Perlen, in Form von Granulat oder als grobes Pulver vorliegen, wie es beim Mahlen von Substanzpolymerisaten erhalten wird. Die Teilchem haben vorteilhaft einen Durchmesser von 0,1 bis 6 mm, vorzugsweise von 0,4 bis 3 mm.

Die Formmassen können beispielsweise durch Strangpressen oder Aufschäumen und Versintern in Formen zu selbstverlöschenden Schaumstoff-Formkörpern oder -Profilen verarbeitet werden. Aufgrund ihres relativ geringen Gehaltes an organischen Bromverbindungen haben die erfindungsgemäßen Formmassen Erweichungspunkte, die sich von denen der ihnen zugrundeliegenden Polymerisate nur geringfügig unterscheiden.

Ein besonderer Vorteil der erfindungsgemäß eingesetzten Bromverbindungen ist ihre hohe Wirksamkeit, auch ohne synergistische Zusätze, wie Peroxide oder Azoderivate. Ferner werden bei vergleichbarem Bromanteil kürzere Verlöschzeiten als mit herkömmlichen Flammschutzmitteln erzielt. Außerdem ist das Abtropfen deutlich verringert.

Die aus den Formmassen hergestellten selbstverlöschenden Formkörper werden auf folge Weise geprüft:

Zur Prüfung ungeschäumter Massen werden Formkörper mit der Abmessung 0,1 x 10 x 30 cm, zur Prüfung geschäumter Massen solche mit der Abmessung 0,5 x 15 x 40 cm 5 Sekunden lang in eine Gasflamme von 40 mm Flammenhöhe gehalten und die Flamme anschließend mit ruhiger Bewegung entfernt. Die Verlöschzeit des Formkörpers nach Entfernen aus der Flamme ist ein Maß für dessen Flammwidrigkeit. Die angegebenen Verlöschzeiten sind Mittelwerte aus 10 Brennproben. Ungenügend oder gar nicht schwer entflammbar ausgerüstete Formmassen brennen nach Entfernen aus der Flamme vollständig ab.

Die in den Beispielen genannten Teile und Prozente beziehen sich auf das Gewicht.

### Beispiel 1

Es werden jeweils 30 Teile Polystyrol und verschiedene Mengen organischer Bromverbindungen in 100 Teilen Methylenchlorid gelöst. Der Lösung werden 3 Teile Pentan zugesetzt. Danach gießt man die Lösung auf eine Glasplatte aus, läßt das Methylenchlorid bei Raumtemperatur verdunsten. Dabei bleibt das Pentan in homogener Verteilung in der Mischung. Die so erhaltene Folie wird in Wasserdampf von 100°C aufgeschäumt und im Vakuum bei 35°C 12 Stunden lang getrocknet. Die erhaltenen Schaumstoff-Folien sind — soweit sie die erfindungsgemäße Bromverbindunge enthalten — reinweiß. Sie werden nach der oben angegebenen Methode auf ihre Schwerentflammbarkeit geprüft. Die Ergebnisse sind in der Tabelle wiedergegeben.

Als Synergist wurde in einigen Fällen Dicumylperoxid eingesetzt. In den Versuchen wurden folgende Bromverbindungen verwendet:

A: Hexabromcyclododecan
I: 2,4,6-Tris-(tribrommethyl)-1,3,5-triazin

| Versuch | Bromver-bindung | Menge % | Synergist | Verlöschzeit sec |
|---------|------------------|---------|-----------|------------------|
| a | A | 1 | — | 12,0 |
| b | A | 1 | 0,05 | 3,5 |
| c | I | 1 | — | 0 |
| d | I | 0,5 | — | 0 |
| e | I | 0,25 | — | 1,5 |
| f | I | 0,25 | 0,05 | 1,0 |

Die Versuche a und b sind nicht erfindungsgemäß. Hier wird auch ein stärkeres Abtropfen beobachtet.

### Beispiel 2

Beispiel 1 c wird wiederholt, wobei ein Copolymerisat aus 90% Styrol und 10% Acrylnitril verwendet wird. Die Verlöschzeit betrug 0 Sekunden.

### Beispiel 3

An einem Doppelschneckenextruder ist im ersten Drittel des Zylinders ein Stutzen zum Einpressen von Flüssigkeiten angebracht. In diesen Einfüllstutzen wird ein Gemisch aus 100 Teilen Polystyrol, 1,5

3

## 0 000 730

Teilen des Flammschutzmittels I und 1 Teile Kaolin als Keimbildner eingebracht. Die Temperatur beträgt in der Aufschmelzzone 180°C. In der anschließenden Mischzone werden durch den Stutzen solche Mengen Methylchlorid eingepreßt, daß die am Düsenkopf austretende Mischung etwa 10%, bezogen auf das Polystyrol, an Methylchlorid enthält. In der Mischzone beträgt die Temperatur 160°C. In der anschließenden Kühlzone wird die Mischung so weit abgekühlt, daß die aus der Düse austretende Mischung eine Temperatur von 110°C hat. Der aus der Düse austretende Strang schäumt auf. Der erhaltene Schaumstoff hat eine Dicht von etwa 40 g/l. An einem Prüfkörper verlöscht die Flamme praktisch sofort.

Beispiel 4

In einem Rührgefäß löst man in 400 Teilen Wasser 0,64 Teile Polyvinylpyrrolidon als Schutzkolloid und 0,6 Teile Natriumpyrophosphat. Dazu gibt man 200 Teilen Styrol, in welchem zuvor 14 Teile Pentan, 0,75 Teile Benzoylperoxid und 1 Teil des Flammschutzmittels I gelöst wurden. Man heizt unter Rühren während 20 Stunden auf 70°C und hält weitere 15 Stunden bei 85°C. Das entstandene treibmittelhaltige Polystyrol wird abgetrennt, gewaschen und getrocknet. Die nach Einwirkung von Wasserdampf erhaltenen vorgeschäumten Teilchen werden nach eintägiger Lagerung durch weitere Behandlung mit Wasserdampf in einer Form zu Schaumpolystyrol-Blöcken verschweißt. Die Farbe dieser Blöcke ist reinweiß. Man schneidet aus ihnen mit Hilfe eines elektrisch beheizten Drahtes Schaumstoffplatten von 1,5 cm Dicke. Diese werden mehrere Tage bei Raumtemperatur gelagert und auf etwa 30 x 40 cm zurechtgeschnitten. Anschließend hält man derartige Platten mit ihrer Kante in eine leuchtende Gasflamme, entfernt diese und mißt die Zeit bis zum Verlöschen des Schaumes. Die Verlöschzeit beträgt 0 Sekunden bzw. die Proben entflammen praktisch nicht.

Beispiel 5

Ein expandierbares Polystyrol-Granulat mit einem Gehalt von 6,4% Pentan und einem mittleren Teilchendurchmesser von 1,5 mm wird mit 0,3% pulverförmigem Flammschutzmittel I, sowie 0,025% Kieselsäure einer mittleren Teilchengröße von 12 $\mu$m als Antiverklebungsmittel durch einfaches Auftrommeln im Schaufelmischer 3 Minuten vermischt. Aus dem Granulat wird durch Behandlung mit Wasserdampf ein Schaumstoff erhalten, an dem eine Verlöschzeit von 0,5 Sekunden gemessen wird.

### Patentansprüche

1. Flammfeste, thermoplastische Formmassen auf Basis von Styrolpolymerisaten, die 0,05 bis 5 Gewichtsprozent einer heterocyclischen organischen Bromverbindung als Flammschutzmittel sowie ein Treibmittel enthalten, dadurch gekennzeichnet, daß die Bromverbindung 2,4,6-Tris-(tribrommethyl)-1,3,5-triazin ist.

2. Flammfeste, thermoplastische Formmassen nach Anspruch 1, dadurch gekennzeichnet, daß sie 3 bis 10 Gewichtsprozent eines flüssigen oder gasförmigen organischen Treibmittels enthalten.

3. Verwendung der Formmassen nach Anspruch 1 zur Herstellung von selbstverlöschenden Formkörpern durch Spritzgießen, Strangpressen oder Aufschäumen und Versintern.

4. Verwendung der Formmassen nach Anspruch 2 zur Herstellung von selbstverlöschenden Schaumstoffen.

### Revendications

1. Matières à mouler thermoplastiques ignifuges à base de polymères du styrène, contenant 0,05 à 5% en poids d'un composé bromé organique hétérocyclique comme agent ignifugeant, ainsi qu'un agent d'expansion, caracterisées en que le composé bromé est la 2,4,6-tris(tribromométhyl)-1,3,5-triazine.

2. Matières à mouler thermoplastiques ignifuges suivant la revendication 1, caractérisées en ce qu'elles contiennent 3 à 10% en poids d'un agent d'expansion organique liquide du gazeux.

3. Utilisation des matières à mouler suivant la revendication 1 pour la fabrication de pièces façonnées auto-extinguibles par moulage par injection, moulage par extrusion ou par expansion et frittage.

4. Utilisation des matières à mouler suivant la revendication 2 pour la préparation de matériaux expansés auto-extinguibles.

### Claims

1. Flameproof thermoplastic molding materials based on a styrene polymer and containing from 0.05 to 5 percent by weight of a heterocyclic organic bromine compound as the flameproofing agent, and a blowing agent, characterized in that the bromine compound is 2,4,6-tris-(tribromomethyl)-1,3,5-triazine.

2. Flameproof thermoplastic molding materials as claimed in claim 1, characterized in that they contain from 3 to 10 percent by weight of a liquid or gaseous organic blowing agent.

**0 000 730**

3. Use of the molding materials as claimed in claim 1 for the production of self-extinguishing moldings by injection-molding, extrusion or foaming and sintering.

4. Use of the molding materials as claimed in claim 2 for the production of self-extinguishing foams.